(19) Europäisches Patentamt
European Patent Office
Office européen des brevets

(11) EP 1 491 513 A1

(12) **EUROPEAN PATENT APPLICATION**
published in accordance with Art. 158(3) EPC

(43) Date of publication:
**29.12.2004 Bulletin 2004/53**

(21) Application number: **03712920.2**

(22) Date of filing: **25.03.2003**

(51) Int Cl.$^7$: **C03C 3/06**, C03B 20/00

(86) International application number:
**PCT/JP2003/003618**

(87) International publication number:
**WO 2003/080525 (02.10.2003 Gazette 2003/40)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.03.2002 JP 2002083476**

(71) Applicant: **Nikon Corporation**
**Tokyo 100-8331 (JP)**

(72) Inventors:
- **MIZUGUCHI, Masafumi**
  **Chiyoda-ku, Tokyo 100-8331 (JP)**
- **FUJIWARA, Seishi**
  **Chiyoda-ku, Tokyo 100-8331 (JP)**
- **KOMINE, Norio**
  **Chiyoda-ku, Tokyo 100-8331 (JP)**

(74) Representative: **Wiebusch, Manfred**
**TER MEER STEINMEISTER & PARTNER GbR,**
**Patentanwälte,**
**Artur-Ladebeck-Strasse 51**
**33617 Bielefeld (DE)**

(54) **SYNTHETIC QUARTZ GLASS MEMBER AND PROCESS FOR PRODUCING THE SAME**

(57) In a method for producing a quartz glass member, an $F_2$ laser is radiated onto a sample obtained from a quartz glass base material under a predetermined condition to judge whether or not a peak intensity of $H_2$ Raman scattering light is decreased by not less than 80 % as compared with a peak intensity of $H_2$ Raman scattering light obtained for a sample not irradiated with the $F_2$ laser. If the peak intensity of $H_2$ Raman scattering light is decreased by less than 80 %, then it is judged that the laser resistance of the quartz glass base material is sufficient, and the synthetic quartz glass member is processed from the base material. The compaction of the sample is also measured.

Fig. 5

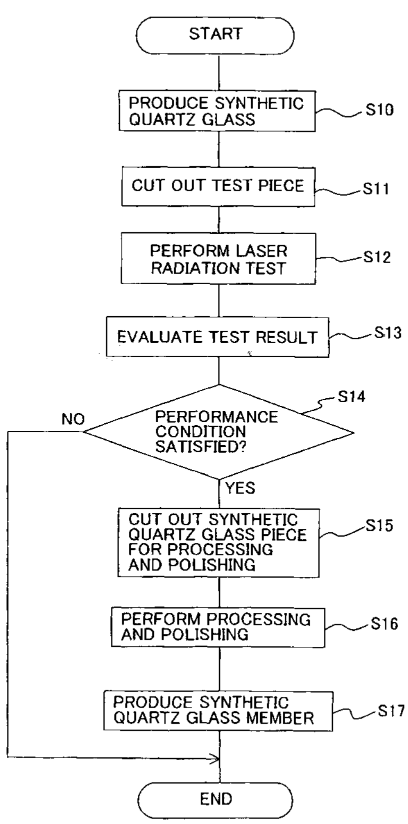


EP 1 491 513 A1

## Description

### TECHNICAL FIELD

The present invention relates to a synthetic quartz glass member including, for example, lenses and prisms for the ultraviolet laser to be used, for example, for the excimer laser lithography, and reticle (photomask) substrates as master plates for circuit patterns of integrated circuits, and a method for producing the same.

### BACKGROUND ART

A reduction projection exposure apparatus (or photolithography apparatus) is principally used to transfer integrated circuit patterns such as IC and LSI. As for the projection optical system to be incorporated into the apparatus, it is required that a wide exposure area is secured as the integrated circuit is highly integrated progressively, and it is required that a higher resolution or resolving power is provided over the entire exposure area. In order to improve the resolving power of the projection optical system, it is conceived that the exposure wavelength is further shortened, or the numerical aperture (NA) of the projection optical system is increased.

As for the exposure wavelength, the realization of short wavelength is advanced from the KrF (248 nm) excimer laser which is principally used as the light source for the semiconductor exposure apparatus at present to the ArF (193 nm) excimer laser which is the vacuum ultraviolet light source. At present, the $F_2$ (157 nm) laser is also investigated in order to further advance the realization of high integration.

In relation to the conventional quartz glass member for the KrF excimer laser, the following fact has been reported. That is, any defective structure of the reduced type (or the oxygen-deficient type) represented by the Si-Si bond is mixed during the production step stage, and such a structure behaves as a precursor to cause the deterioration of optical characteristics upon the irradiation with the laser. For example, the Si-Si bond is subjected to the photodegradation or photodecomposition to produce the E' center (Si• ("•" means the lone electron)). The E' center forms an optical absorption band at 215 nm in the vicinity of the laser wavelength. Therefore, the light-transmissive characteristics of the quartz glass member are conspicuously deteriorated. Other than the above, for example, impurities of SiOH and SiCl as well as metal ions also behave as important factors to conspicuously deteriorate the light-transmissive characteristics of the quartz glass member.

On the other hand, in the case of the ArF excimer laser and the $F_2$ laser, the energy possessed by one photon is high as compared with the KrF excimer laser. Therefore, in this case, the damage exerted on the quartz glass is large, and the deterioration of optical characteristics, which is caused in a process different from that of the KrF excimer laser, is conspicuous. For example, the Si-H bond is subjected to the photodecomposition to form the E' center, and/or the strained Si-O-Si bond is subjected to the photodecomposition to generate NBOHC (Si-O•). The E' center forms a light absorption band at 215 nm, and NBOHC forms a light absorption band at 260 nm. Therefore, any quartz glass member to be used for the exposure apparatus, in which the defect as described above is generated, undergoes conspicuous deterioration of the light-transmissive performance in a region from the ultraviolet to the vacuum ultraviolet.

It is considered that the strained Si-O-Si bond has a bond angle which is largely deviated from the ordinary Si-O-Si bond angle (≈ 145° ± 10°) distribution. It is postulated that the strained Si-O-Si bond has an optical absorption band at a lower portion in the vicinity of the essential band end of the quartz glass. According to a certain theory, the bond energy of this case is small as compared with those obtained in ordinary cases, and the strained Si-O-Si bond is a chemically unstable bond. The $F_2$ laser beam, which is planned to be applied to the exposure light source in recent years, has a wavelength of 157 nm which is extremely short. Unlike the conventional excimer laser, the $F_2$ laser beam makes it possible to directly excite the essential band end of the quartz glass in accordance with one photon process. Therefore, when the $F_2$ laser is used as a radiation light source, it is postulated that the strained Si-O-Si bond is drastically reacted. This fact has been reported by the inventors in OPTICS LETTERS Vol. 24, No. 13, July 1, 1999 pp. 863-865. In this paper, the inventors have observed the change of the infrared absorption spectrum of SiOH and the change of the Raman spectrum of $H_2$ by radiating the $F_2$ excimer laser having the wavelength of 157 nm at a predetermined intensity for a predetermined period of time onto commercially available quartz glass dissolved with $H_2$. In this paper, it is reported that the infrared absorption spectrum band of SiOH is subjected to the red shift, and the integrated intensity is increased by 73 % when the $F_2$ excimer laser is radiated. As for the Raman spectrum of $H_2$, it is reported that the intensity of the band based on $H_2$ in the vicinity of 4133 $cm^{-1}$ is lowered to 1/4. It is considered that this result is based on the excitation of the Si-O-Si bond by being irradiated with the $F_2$ excimer laser as indicated by the following formula (1). In particular, it has been suggested in this paper by the inventors that this reaction tends to occur in relation to the strained Si-O-Si bond.

$$\text{Si-O-Si} + H_2 \rightarrow \text{Si-O-H} + \text{H-Si} \qquad (1)$$

In relation to the synthetic quartz glass member to be used for the projection exposure apparatus, a technique has been disclosed (for example, Japanese Patent Application Laid-open No. 7-291644 (Japanese Patent No. 3158854) and Japanese Patent Application Laid-open No. 10-53432), which prescribes, for example, the E' center concentration generated in the quartz glass and the impurity concentration in the quartz glass. For example, in Japanese Patent Application Laid-open No. 7-291644, when the amount of change of the absorption coefficient at 215 nm corresponding to the number of radiation pulses upon the laser radiation is constant irrelevant to the repeating frequency of the laser, it is judged that a quartz glass member is obtained, which has the laser resistance wherein the E' center is hardly generated and which is to be employed for an optical system for the high output pulse laser that is usable in a specified wavelength region of not more than 400 nm. In Japanese Patent Application Laid-open No. 10-53432, the concentration of Na contained in the quartz glass is not more than 20 wt. ppm to enhance the transmittance in the vacuum ultraviolet region in which the wavelength is not more than 220 nm.

However, in the patent documents as described above, the nonessential defect such as the reduced type defect or SiOH and/or the impurity concentration is merely prescribed. Any synthetic quartz glass member, which has the laser resistance, is not produced by taking the notice of the amount of the strain bond which essentially exists in the glass structure. When the radiation of the ArF excimer laser or the radiation of the $F_2$ laser is performed for an extremely long period of time, then the presence of the strain bond as described above is not negligible, and there is a possibility to arrive at the deterioration of the transmissive performance of the glass. In OPTICS LETTERS Vol. 24, No. 13 reported by the inventors, the change of the strain bond amount is suggested from the spectrum change of $H_2$ and SiOH. However, in this case, any physical characteristic change of the quartz glass itself, which is more directly concerned, is not observed.

Therefore, it is demanded to provide a correct, direct, and convenient method for judging the quartz glass which has high resistance to the vacuum ultraviolet laser beam such as ArF (193 nm) and $F_2$ (157 nm).

DISCLOSURE OF THE INVENTION

A first object of the present invention is to provide a synthetic quartz glass member having excellent laser resistance to be used for a vacuum ultraviolet exposure apparatus, and a method for producing the same. A second object of the present invention is to provide a synthetic quartz glass member which scarcely involves strain bond to be used for reticle (photomask) substrates and lens members for focusing optical systems for a vacuum ultraviolet exposure apparatus. A third object of the present invention is to provide an exposure apparatus provided with an illumination optical system or a projection optical system having an optical member which makes it possible to maintain a satisfactory transmittance over a long period of time even when a high energy vacuum ultraviolet light source such as ArF laser is used.

According to a first aspect of the present invention, there is provided a synthetic quartz glass member for being irradiated with a vacuum ultraviolet light beam, wherein OH groups, which are contained in the synthetic quartz glass member, are increased by less than 100 wt. ppm, and a compaction is not more than 2 ppm, when the synthetic quartz glass member is subjected to $2 \times 10^6$ pulses of an $F_2$ laser beam with a fluence of 10 $mJ/cm^2$.

The inventors have radiated the $F_2$ laser, which is considered to photodecompose the strain bond in one photon absorption process, onto the synthetic quartz glass member in order to estimate, in a relatively short period of time, the amount of the strained Si-O-Si bond existing in the quartz glass (hereinafter appropriately referred to as "strain bond" as well). The first requirement, in which the OH groups are increased by less than 100 wt. ppm when the $F_2$ laser beam is radiated under the condition as described above, is derived from the fact that the strain bond is reacted in accordance with the following formula (2).

Si-O-Si (strain bond) + $H_2$ $\rightarrow$ Si-O-H + H-Si ... (2) That is, when the strain bond exists in the quartz glass, the reaction is caused with the hydrogen ($H_2$) existing in the quartz glass in the presence of the $F_2$ laser beam to produce Si-O-H. According to this reaction, when the increase in the OH group is small, i.e., less than 100 wt. ppm even when the $F_2$ laser beam is radiated, the amount of the strain bond is originally small in the quartz glass. In the case of such a material, the amount of Si-O-H formed after the radiation of the $F_2$ laser beam is small. Therefore, the decrease in transmittance in the vacuum ultraviolet region, which is considered to be caused by the reaction of the strain bond, is avoided. Therefore, the satisfactory quartz glass is selected by measuring the increase in the OH group by radiating the $F_2$ laser beam. Such quartz glass is used to produce the quartz glass member for the vacuum ultraviolet, including, for example, lenses and reticles.

Further, the inventors have found out the fact that when the first requirement is satisfied, the second requirement is almost satisfied, in which the compaction is within the predetermined range even when the $F_2$ laser beam is radiated under the condition as described above. This fact is considered as follows. That is, the physical characteristic, i.e., the change of the compaction appears, because the strain bond is a bond structure which is unstable in view of the energy, and the average value of the angles of the strained Si-O-Si bond becomes a more stable and small angle as the $F_2$ laser beam is radiated. In this specification, the term "compaction" means the tendency of the quartz glass to possess the high refractive index, which is represented by a value obtained by measuring the difference in optical path length between the portion irradiated with the $F_2$ laser beam and the portion not irradiated therewith and dividing the difference in optical path length by the thickness of the sample. When the compaction is not more than 2 ppm, the quartz glass member, which is excellent in the resistance to the laser, may be obtained, because the amount of strain bond is small. The compaction is preferably not more than 1.8 ppm and especially preferably not more than 1 ppm. The quartz glass member, which satisfies the first and second requirements, is preferably usable for the optical system of the exposure apparatus which uses the vacuum ultraviolet light beam as the light source, because the deterioration of characteristics including the deterioration of the transmittance is reliably suppressed with respect to the vacuum ultraviolet light such as ArF and the $F_2$ laser.

In the present invention, the increase in the OH groups can be determined according to the infrared spectroscopy or the Raman spectroscopy. For example, the increase in the OH groups is determined by observing the increase in the integrated intensity of the infrared absorption band based on the OH stretching vibration after radiating the $F_2$ laser beam under the condition as described above. In particular, when the strain bond exists in the quartz glass, it is possible to observe the amount of the integrated intensity change, because the intensity of the infrared absorption band of SiOH appearing in the vicinity of 3660 $cm^{-1}$ is clearly changed by being irradiated with the $F_2$ laser beam. For example, when the change of the integrated intensity of the infrared absorption band of SiOH appearing in the vicinity of 3660 $cm^{-1}$ is less than 10 %, the increase in the OH groups may be less than 100 wt. ppm. It has been revealed in Examples described later on that the amount of the OH groups determined by the method as described above, i.e., the amount of the strain bond is strongly correlated with the laser resistance of the quartz glass.

According to a second aspect of the present invention, there is provided a synthetic quartz glass member for being irradiated with a vacuum ultraviolet light beam, wherein $H_2$ molecules, which are contained in the synthetic quartz glass member, are decreased by less than 1 x $10^{18}$ molecules/$cm^3$, and a compaction is not more than 2 ppm, when the synthetic quartz glass member is subjected to 2 x $10^6$ pulses of an $F_2$ laser beam with a fluence of 10 mJ/$cm^2$.

The third requirement, in which the $H_2$ molecules dissolved in the quartz glass are decreased by less than 1 x $10^{18}$ molecules/$cm^3$ after being irradiating with the $F_2$ laser beam under the condition as described above, is derived from the fact that the strain bond is reacted in accordance with the formula (2) described above. That is, when the strain bond exists in the quartz glass, then the strain bond is reacted with $H_2$ in the quartz glass in the presence of the $F_2$ laser beam, and the amount of $H_2$ is decreased. Therefore, when the decrease in the $H_2$ molecules is small, i.e., less than 1 x $10^{18}$ molecules/$cm^3$ even when the $F_2$ laser beam is radiated, it is appreciated that the amount of strain bond is originally small in the quartz glass. Therefore, the satisfactory quartz glass is selected by measuring the decrease in the $H_2$ molecules after radiating the $F_2$ laser beam. Further, the inventors have found out the fact that when the third requirement is satisfied, the second requirement is almost satisfied, in which the compaction of the quartz glass is not more than 2 ppm after radiating the $F_2$ laser beam under the condition described above. This fact is considered as follows. That is, the physical characteristic of the change of the refractive index appears, because the bond angle of the strain bond is decreased. The quartz glass member, which satisfies the second and third requirements, has the durability against the vacuum ultraviolet light beam such as ArF and the $F_2$ laser.

In the present invention, the decrease in the $H_2$ molecules can be determined according to the infrared spectroscopy or the Raman spectroscopy. For example, the decreased in the $H_2$ molecules is determined by observing the Raman scattering peak based on the stretching vibration of the $H_2$ molecule when the $F_2$ laser beam is radiated under the condition as described above. In particular, a Raman scattering peak, which is based on the $H_2$ stretching vibration in the vicinity of 4140 $cm^{-1}$, is clearly changed by being irradiated with the $F_2$ laser beam. Therefore, according to an experiment performed by the inventors, it has been revealed that the decrease in the integrated intensity of the peak of less than 80 % corresponds to the decrease in the $H_2$ molecules of less than 1 x $10^{18}$ molecules/$cm^3$.

It is preferable that the synthetic quartz glass member of the present invention contains hydrogen in an amount corresponding to a hydrogen molecule concentration of not less than 2 x $10^{17}$ molecules/$cm^3$ in the synthetic quartz glass member, in order to improve the laser resistance in the vacuum ultraviolet region.

The synthetic quartz glass member of the present invention may contain OH groups by 500 wt. ppm to 1,300 wt. ppm. Owing to the OH groups, the glass viscosity is appropriately lowered, and the structural load on the Si-O-Si bond is reduced. Therefore, when the OH groups are contained within the concentration range as described above, it is possible to suppress the occurrence of the strain bond.

It is preferable that the synthetic quartz glass member of the present invention contains fluorine by not less than 300 wt. ppm. Owing to the fluorine, the glass viscosity is lowered, and the structural load on the Si-O-Si bond is reduced. Therefore, when the fluorine is contained by not less than 300 wt. ppm, it is possible to effectively suppress the occurrence of the strain bond.

It is preferable for the synthetic quartz glass member of the present invention that an internal transmittance in a direction perpendicular to an optical axis, which is obtained after radiating 2 x $10^6$ pulses of the $F_2$ laser beam with the fluence of 10 mJ/$cm^2$, is not less than 90 % per a thickness of 1/4 inch (about 0.64 cm), and a difference between maximum and minimum values of the internal transmittance is within 1.0 % in an irradiated area. On this condition, the decrease in the transmittance in the vacuum ultraviolet region, which is considered to be caused by the reaction of the strain bond, is scarcely caused, and the uniformity of the transmittance is maintained. Therefore, it is possible to provide the synthetic quartz glass member for the vacuum ultraviolet having the excellent laser resistance.

According to a third aspect of the present invention, there is provided a method for producing a synthetic quartz glass member, comprising the steps of: producing a base material of synthetic quartz glass; sampling a part of the base material; and processing the base material to prepare the synthetic quartz glass member on condition that OH groups, which are contained in the part of the base material, are increased by less than 100 wt. ppm, and a compaction is not more than 2 ppm, when the part of the sampled base material is subjected to 2 x $10^6$ pulses of an $F_2$ laser beam with a fluence of 10 $mJ/cm^2$. In the method of the present invention, the quartz base material, which is preferably usable for the vacuum ultraviolet light, can be selected by radiating the $F_2$ laser beam onto the part of the base material under the condition as described above to detect the increase in the OH groups and the compaction.

In the method of the present invention, the increase in the OH groups can be determined by the infrared or Raman spectroscopy. For example, the increase in the OH groups may be determined in accordance with increase in an integrated intensity of an infrared absorption band based on OH stretching vibration. In order to allow the increase in the OH groups to be less than 100 wt. ppm, it is preferable that the increase in the integrated intensity of the infrared absorption band of SiOH based on the OH stretching vibration, which appears in the vicinity of 3660 $cm^{-1}$, is less than 10 %.

According to a fourth aspect of the present invention, there is provided a method for producing a synthetic quartz glass member, comprising the steps of: producing a base material of synthetic quartz glass; sampling a part of the base material; and processing the base material to prepare the synthetic quartz glass member on condition that $H_2$ molecules, which are contained in the part of the base material, are decreased by less than 1 x $10^{18}$ molecules/$cm^3$, and a compaction is not more than 2 ppm, when the part of the sampled base material is subjected to 2 x $10^6$ pulses of an $F_2$ laser beam with a fluence of 10 $mJ/cm^2$. In the method of the present invention, the quartz glass material, which is preferably usable for the vacuum ultraviolet light, can be selected by radiating the $F_2$ laser beam onto the part of the base material under the condition as described above to detect the decrease in the $H_2$ molecules and the compaction.

Usually, the quartz glass for the ArF laser contains a large amount of OH groups, through which the $F_2$ laser beam having a wavelength of 157 nm is hardly transmitted. Therefore, even when the ArF laser is directly radiated onto the quartz glass to perform any durability test, then a long period of time is required, and it is impossible to expect any correct judgment. In,the present invention, the $F_2$ laser beam is used as the light source to observe the decrease in the $H_2$ molecules, and thus the strain bond can be observed correctly in a short period of time. Accordingly, the quartz glass base material for the ArF laser, which has satisfactory transmittance characteristics, has been obtained with ease.

In the method of the present invention, the decrease in the $H_2$ molecules can be determined by the infrared spectroscopy or the Raman spectroscopy. For example, the decrease in the $H_2$ molecules dissolved in the quartz glass may be determined by observing a Raman scattering spectrum based on stretching vibration of the $H_2$ molecules in the vicinity of 4140 $cm^{-1}$. In this procedure, when the decrease in the peak in the vicinity of 4140 $cm^{-1}$ is less than 80 %, it is possible to judge that the $H_2$ molecules are decreased by less than 1 x $10^{18}$ molecules/$cm^3$.

BRIEF DESCRIPTION OF THE DRAWINGS

Fig. 1 shows a block diagram illustrating a schematic arrangement of a synthesizing furnace for producing synthetic quartz glass.

Fig. 2 shows a block diagram illustrating an arrangement of a laser-radiating apparatus for allowing inspective $F_2$ laser pulses to come into the synthetic quartz glass obtained by using the synthesizing furnace shown in Fig. 1.

Fig. 3 shows a block diagram illustrating an arrangement of a Raman scattering spectroscopy measuring apparatus for measuring optical characteristics of a sample SA damaged by using the laser-radiating apparatus shown in Fig. 2.

Fig. 4 shows a block diagram illustrating an arrangement of an infrared transmittance spectroscopy measuring apparatus for measuring optical characteristics of the sample SA damaged by using the laser-radiating apparatus shown in Fig. 2.

Fig. 5 shows a flow chart explaining a method for producing a synthetic quartz glass member by using the apparatuses shown in Figs. 1 to 4.

Fig. 6A shows a graph illustrating the change of the $H_2$ Raman scattering peak of a sample, and Fig. 6B shows a graph illustrating the change of the $H_2$ Raman scattering peak of a comparative sample.

Fig. 7A shows a graph illustrating the OH infrared absorption of a sample, and Fig. 7B shows a graph illustrating the OH infrared absorption of a comparative sample.

Fig. 8 schematically shows a structure of an exposure apparatus of the present invention.

BEST MODE FOR CARRYING OUT THE INVENTION

Fig. 1 schematically shows a synthesizing furnace for producing synthetic quartz glass. The synthesizing furnace includes a burner 2 which burns and flames to hydrolyze a raw material, a target 4 made of quartz glass which retains an ingot IN formed by the hydrolysis, a driving unit 6 which effects, for example, the rotation of the target 4 about the axis, a raw material supply unit 8 which supplies the raw material such as silicon tetrachloride to the burner 2, a fuel supply unit 10 which supplies the hydrogen gas to the burner 2, and an oxygen supply unit 12 which supplies the oxygen to the burner 2.

The burner 2 is installed to an upper portion of a furnace chamber 14 with its tip directed toward the target 4. Although not shown, for example, a discharge tube for discharging the exhaust gas to the outside of the furnace chamber 14 after the combustion is provided on a side wall of the furnace chamber 14.

The target 4 is rotated at an appropriate speed about the vertical axis by being driven by the driving unit 6, and the target 4 makes swinging movement in the leftward and rightward directions along the sheet surface of Fig. 1. The target 4 is gradually moved downwardly by the aid of the driving unit 6 as the ingot is grown.

The raw material supply unit 8 is provided with a flow rate-regulating section 8a. The high purity silicon tetrachloride as the raw material is spouted from a center tube of the burner 2 together with the carrier gas. When silicon tetrafluoride is used as another raw material, it is possible to obtain fluorine-doped type quartz glass.

The fuel supply unit 10 is provided with a flow rate-regulating section 10a. The fuel supply unit 10 supplies the hydrogen as the raw material to an outer tube of the burner 2. The oxygen supply unit 12 is also provided with a flow rate-regulating section 12a. The oxygen, which is to be mixed with the fuel, is supplied by the oxygen supply unit 12 to the outer tube of the burner 2.

An explanation will be made about the production of the synthetic quartz glass based on the use of the synthesizing furnace shown in Fig. 1. The oxygen gas and the hydrogen gas are mixed and burned with the burner 2 to form the flame. Simultaneously, silicon tetrachloride is spouted as the raw material from the burner 2 together with the carrier gas. The raw material is hydrolyzed in the flame disposed at the tip of the burner 2. Accordingly, quartz glass fine particles (suite) are produced. This product is deposited and melted on the target plate which is rotated at an appropriate speed, which makes the swinging movement in the horizontal direction, and which is moved downwardly at an appropriate speed, and thus the ingot IN is synthesized. When the target 4 is rotated, swingably moved, and moved downwardly at a certain period during the synthesis as described above, it is possible to obtain the quartz glass ingot which has the high uniformity or homogeneity of the refractive index. The quartz glass ingot is appropriately subjected to the annealing treatment after the synthesis, and the characteristics are improved, for example, by mitigating the internal strain.

Fig. 2 shows a block diagram illustrating an arrangement of a laser-radiating apparatus for allowing inspective $F_2$ laser pulses to come into the synthetic quartz glass obtained by using the synthesizing furnace shown in Fig. 1. The laser-radiating apparatus is an accelerating test machine for estimating the amount of the strained Si-O-Si bond in the synthetic quartz glass in a relatively short period of time. The laser-radiating apparatus includes a laser light source 22 which generates the $F_2$ laser beam, a radiating optical system 24 which uniformly radiates the laser pulses from the laser light source 22 onto a sample SA cut out from the ingot IN, a holder 26 which holds the sample SA with respect to the laser light source 22 and the radiating optical system 24, and a control unit 28 which controls the operation of the laser light source 22.

The laser pulses in the vacuum ultraviolet region of 157 nm are outputted from the laser light source 22. The intensity of the laser pulse outputted from the laser light source 22 is regulated on the basis of a control signal supplied from the control unit 28. The radiating optical system 24 regulates the beam shape and the energy density of the laser pulse to be come into the sample SA.

The control unit 28 outputs the control signal to the laser light source 22 so that the fluence of the laser pulse to be radiated onto the sample SA is regulated to be 10 $mJ/cm^2$. The reason, why the fluence is 10 $mJ/cm^2$, is that this value is the maximum power of the laser beam immediately radiated from a commercially available $F_2$ laser apparatus. Further, the control unit 28 can regulate the number of laser pulses to be radiated onto the sample SA to be $2 \times 10^6$ by counting the number of pulses. The reason, why the number of laser pulses is $2 \times 10^6$, is that this value resides in a period of time required for the reaction of the formula (2) to distinctly appear. That is, the laser power (fluence) and the number of pulses are the values selected to effectively execute the accelerating test based on the use of the $F_2$ laser.

An explanation will be made below about the operation for radiating the laser beam by using the laser-radiating apparatus shown in Fig. 2. At first, the sample SA of φ60 mm is prepared by cutting out a part of the ingot IN of the synthetic quartz glass obtained by using the synthesizing furnace shown in Fig. 1, and the sample SA is set to the holder 26. Subsequently, the laser light source 22 is operated on the basis of the control signal supplied from the control unit 28, and the $F_2$ laser pulses each having the fluence of 10 $mJ/cm^2$ with $2 \times 10^6$ pulses are come into the sample SA.

Fig. 3 shows a block diagram illustrating a Raman scattering spectroscopy measuring apparatus for measuring Raman scattering characteristics of the sample SA damaged by using the laser-radiating apparatus shown in Fig. 2. The Raman scattering spectroscopy measuring apparatus includes a light source 32 which generates an exciting light beam required for the measurement, a radiating optical system 34 which allows the laser pulses from the light source 32 to uniformly come into the sample SA, a light-collecting optical system 36 which collects the light beam outgoing from the sample SA, a spectrometer 38 which measures the wavelength distribution of the transmitted light collected by the light-collecting optical system 36, and a control unit 39 which controls the operation of the spectrometer 38.

In this embodiment, the light source 32 includes an exciting laser oscillator (Ar gas laser) for inducing the Raman scattering of $H_2$. An exciting light beam having a wavelength of 514 nm is outputted at an appropriate intensity. The radiating optical system 34 regulates the beam shape and the energy density of the exciting light beam to be allowed to come into the sample SA. The light-collecting optical system 36 collects the Raman scattering light generated in the sample SA so that the light is allowed to come into the spectrometer 38. The spectrometer 38 detects the Raman scattering light collected by the light-collecting optical system 36 to measure the spectrum component intensity thereof. The control unit 39 controls the spectrometer 38 by outputting the control signal thereto to measure the spectroscopic intensity of the Raman scattering light outgoing from the sample SA and determine the peak intensity thereof.

Fig. 4 shows a block diagram illustrating an infrared transmittance spectroscopy measuring apparatus for measuring infrared absorption characteristics of the sample SA damaged by using the laser-radiating apparatus shown in Fig. 2. The infrared transmittance spectroscopy measuring apparatus includes a light source 32 which generates the illumination light beam required for the measurement, a spectrometer 33 which selects and outputs a light beam having a specified wavelength from the illumination light beam radiated from the light source 32, a detector 35 which measures the intensity of the illumination light beam supplied from the spectrometer 33 and transmitted through the sample SA, and a control unit 37 which controls the operation of the spectrometer 33 and the detector 35.

In this embodiment, the light source 32 includes a halogen lamp which serves as an infrared illumination light source unit. Infrared illumination light having wavelengths of 2.5 to 2.9 μm, which includes the absorption band based on the OH group, is outputted at an appropriate intensity. The spectrometer 33 continuously switches the wavelength of the infrared illumination light to be supplied to the sample SA. The detector 35 measures the intensity of the light transmitted through the sample SA. The control unit 37 outputs the control signal to the spectrometer 33 and the detector 35 to determine the integrated intensity by measuring the spectrometric intensity of the transmitted light for the sample SA.

Next, an explanation will be made about a method for measuring the compaction. The amount of compaction was measured by using a commercially available Fizeau laser interferometer. An He-Ne laser (wavelength: 633 nm) was used as the light source. The laser beam from the light source was converted into a parallel light beam by allowing the laser beam to pass through a divergent lens, a beam splitter, and a collimator lens, and the light beam was allowed to arrive at a plane glass plate polished highly accurately and referred to as "fiducial plate". A part of the light beam is reflected by a reference surface of the fiducial plate. The remaining light beam is transmitted through the sample, the light beam arrives at a mirror installed at the back surface of the sample, and the light beam is reflected. The reflected light beam from the reference surface and the reflected light beam from the mirror reversely travel along the original optical path, and they cause the interference followed by being introduced into an image pickup device (CCD) by the aid of a beam splitter. Thus, an interference fringe image is obtained. The interference fringes are subjected to the image analysis by the fringe scan method to obtain the optical path length (nL) distribution of the sample. In this expression, n represents the refractive index, and L represents the thickness of the sample. When the compaction is caused, the refractive index of the sample is raised by a slight amount ($\Delta$n). The optical path length is not changed for the non-irradiated portion. Therefore, the difference in optical path length between the irradiated portion and the non-irradiated portion is $\Delta$nL. This value was divided by the thickness of the sample, and thus the compaction amount $\Delta$n was obtained.

Fig. 5 shows a flow chart illustrating the method for producing the synthetic quartz glass member by using the apparatuses shown in Figs. 1 to 4.

At first, the ingot IN of the synthetic quartz glass is produced by using the synthesizing furnace shown in Fig. 1 (Step S10). That is, the ingot IN is formed on the target 4 by hydrolyzing the raw material in the flame jetted from the burner 2.

Subsequently, the sample SA is prepared by cutting out a test piece from the ingot IN obtained in Step S10 (Step S11).

Subsequently, the accelerating radiation test is performed with the $F_2$ laser for the sample SA by using the laser-radiating apparatus shown in Fig. 2 (Step S12). That is, the $F_2$ laser pulses each having the fluence of 10 $mJ/cm^2$ with 2 x $10^6$ pulses are come into the sample SA.

Subsequently, the Raman scattering characteristic based on $H_2$ of the sample SA is measured by using the analyzer shown in Fig. 3, and the absorption characteristic based on OH of the sample SA is measured by using the analyzer shown in Fig. 4 (Step S13).

That is, the peak intensity of the Raman scattering light having a wavelength of about 2.4 μm (wavenumber of about 4140 $cm^{-1}$) is evaluated by radiating the exciting light beam onto the sample SA. The integrated intensity of the absorption band having a wavelength of about 2.7 μm (wavenumber of about 3660 $cm^{-1}$) is evaluated by radiating the appropriate illumination light beam onto the sample SA. The compaction is measured for the sample SA by using the laser interferometer.

In this procedure, it is possible to estimate the changes of the peak intensity of the Raman scattering light and the integrated intensity of the infrared absorption band by preparing a pair of a sample SA treated with the apparatus shown in Fig. 2 and a sample SA not treated with the apparatus shown in Fig. 2 and performing the measurements in parallel by using the analyzers shown in Figs. 3 and 4. Further, the following procedure is also available. That is, a sample SA before the treatment is used to measure the peak intensity of the Raman scattering light and the integrated intensity of the infrared absorption band. The same sample SA is treated with the apparatus shown in Fig. 2. The sample SA after the treatment can be used to measure the peak intensity of the Raman scattering light and the integrated intensity of the infrared absorption band. In this procedure, the changes of the peak intensity of the Raman scattering light and the integrated intensity of the infrared absorption band can be directly measured with the same sample.

Subsequently, it is judged whether or not the values of the intensity of the $H_2$ Raman scattering light, the integrated intensity of the OH infrared absorption band, and the compaction obtained in Step S13 satisfy the predetermined performance conditions (Step S14). Specifically, it is judged whether or not the peak intensity of the $H_2$ Raman scattering light in relation to the sample SA after the treatment with the laser-radiating apparatus shown in Fig. 2 is decreased by not less than 80 % as compared with the peak intensity of the $H_2$ Raman scattering light in relation to the sample SA not treated with the apparatus shown in Fig. 2. It is also allowable to judge whether or not the $H_2$ molecules dissolved in the sample are decreased by less than 1 x $10^{18}$ molecules/$cm^3$ by using another chemical analysis method.

Further, it is judged whether or not the integrated intensity of the OH infrared absorption band in relation to the sample SA after the treatment with the apparatus shown in Fig. 2 is increased by not less than 10 % as compared with the integrated intensity of the OH infrared absorption band in relation to the sample SA not treated with the apparatus shown in Fig. 2. It is also allowable to judge whether or not the OH groups in the sample are increased by less than 100 wt. ppm by using another chemical analysis method. Finally, the compaction is calculated by measuring the optical path length for each of the sample SA after the treatment with the laser-radiating apparatus and the untreated sample SA by using the laser interferometer to judge whether or not the value of the compaction is not more than 2 ppm.

If the peak intensity of the $H_2$ Raman scattering light is decreased by not less than 80 % (if the $H_2$ molecules dissolved in the sample are decreased by not less than 1 x $10^{18}$/$cm^3$), if the integrated intensity of the OH infrared absorption band is increased by not less than 10 % (if the $H_2$ molecules dissolved in the sample are decreased by not less than 1 x $10^{18}$ molecules/$cm^3$), or if the compaction is more than 2 ppm, then it is considered that the laser resistance of the ingot IN obtained in Step S10 is insufficient, and the process comes to an end. On the other hand, if the peak intensity of the $H_2$ Raman scattering light is decreased by less than 80 % (if the $H_2$ molecules dissolved in the sample are decreased by less than 1 x $10^{18}$ molecules/$cm^3$), if the integrated intensity of the OH infrared absorption band is increased by less than 10 % (if the $H_2$ molecules dissolved in the sample are decreased by less than 1 x $10^{18}$ molecules/$cm^3$), or if the compaction is not more than 2 ppm, then it is considered that the laser resistance of the ingot IN obtained in Step S10 is sufficient, and the routine proceeds to the next Step S15.

In Step S15, a glass piece for an optical material is cut out from the ingot IN obtained in Step S10. In other words, a plurality of blocks corresponding to the shape of the objective optical member such as the lens and the prism are cut out from the ingot IN.

Subsequently, the blocks obtained in Step S15 are processed and polished (Step S16). Specifically, the plurality of blocks cut out in Step S15 are subjected to the cutting and the optical surface polishing respectively. If necessary, a coating is applied to the optical surface to obtain the optical member.

Finally, the obtained optical member is fixed to an appropriate position of a holding member such as a lens barrel to complete the synthetic quartz glass member such as the reduction projection lens (Step S17).

Example 1

(1) Sample preparation

At first, a large block for preparing an optical member having a thickness of φ250 mm x 60 mm was cut out from the quartz glass ingot obtained by using the synthesizing furnace shown in Fig. 1. The block was annealed in the air at 950 °C for 100 hours. A circular plate or disk having a thickness of 15 mm was cut out from a direct upper portion of the annealed block. A plurality of small blocks of φ65 mm were obtained from portions disposed in the vicinity of the center and the outer circumference of the circular plate. The small blocks were accurately cut, polished, and processed to obtain inspective samples. The final shape of each of the samples had a dimension of φ60 mm x 10 mm thickness. The samples were used to evaluate the values of the transmittance, the hydrogen concentration, the OH group concentration, and the compaction by the optical transmittance measurement, the Raman scattering measurement, and the refractive index uniformity measurement as described later on. The physical property value (distribution) of, for example, the transmittance of the sample can be regarded as the physical property value (distribution) of the large block for preparing the optical member.

(2) Observation of Raman scattering spectrum

It was confirmed by the Raman spectroscopy that each of the obtained samples contained the OH groups in an amount of 1,000 wt. ppm and the hydrogen molecules in an amount of 1 x $10^{18}$ molecuels/$cm^3$. 2 x $10^6$ pulses of the $F_2$ laser with the fluence of 10 mJ/$cm^2$ were radiated on an area of φ60 mm on the surface of the sample at room temperature. The Raman scattering spectrum of the sample was observed after the radiation of the $F_2$ laser. Fig. 6A shows the Raman scattering spectrums of the sample before and after the radiation of the $F_2$ laser. As shown in Fig. 6A, it is appreciated that the intensity of the Raman scattering band of the hydrogen molecules observed in the vicinity of 4140 $cm^{-1}$ is decreased by 20 % after the radiation. The Raman scattering band intensities of the hydrogen molecules before and after the radiation of the $F_2$ laser are normalized with a Raman scattering peak based on Si-O observed in the vicinity of 800 $cm^{-1}$ respectively. According to the integrated intensity of the Raman scattering band, it was revealed that the sample after the radiation of the $F_2$ laser contained OH by 1,013 wt. ppm and the hydrogen molecules by 0.8 x $10^{18}$ molecules/$cm^3$. That is, as a result of the $F_2$ laser radiation, OH was increased by 13 wt. ppm, and the hydrogen molecules were decreased by 0.2 x $10^{18}$ molecules/$cm^3$.

(3) Measurement of transmittance (λ = 193 nm)

An ArF excimer laser (λ = 193 nm) consisting of 1 x $10^8$ pulses was radiated at 10 mJ/$cm^2$ at room temperature perpendicularly onto an area of φ60 mm on a surface of another sample not irradiated with the $F_2$ laser. The transmittance (including the reflection loss) at 193 nm, which was 90.70 % before the radiation, was changed to 90.67 % at the irradiated portion. The transmittance was scarcely lowered as described above. Therefore, it was successfully confirmed that the sample of Example 1 had the satisfactory laser resistance as the glass for the ArF excimer laser.

(4) Measurement of compaction

The compaction was measured as follows for the sample irradiated with the $F_2$ laser under the condition as described above. At first, the optical path length distribution of a fiducial plate was measured by using a Fizeau laser interferometer without placing any sample. After that, a sample of 60 mmϕ x 10 mm was interposed with the fiducial plate to measure the optical path length distribution. In this procedure, in order to suppress the reflection generated at the contact surface between the sample and the fiducial plate, an oil, which had the same refractive index as the refractive index of the quartz glass, was permeated into the contact surface between the fiducial plate and the sample. The difference between the optical path length measured with the interposed sample and the optical path length measured with no interposed sample was determined to estimate the optical path length distribution of the sample. The compaction amount Δn was obtained by dividing the difference ΔnL in the optical path length between the irradiated portion and the non-irradiated portion by the thickness of the sample. As a result, the compaction amount was 1.8 ppm at the $F_2$ laser irradiated portion.

Comparative Example 1

The sample was synthesized in the same manner as in Example 1. However, in the downstream annealing step, the annealing was applied in the air at 1,200 °C for 10 hours to manufacture a comparative sample which was evaluated in the same manner as in Example 1.

According to the measurement of the Raman scattering spectrum, it was revealed that the comparative sample contained OR by 1,000 wt. ppm and the hydrogen molecules by 1 x $10^{18}$ molecules/$cm^3$. 2 x $10^6$ pulses of $F_2$ laser with the fluence of 10 mJ/$cm^2$ were radiated perpendicularly onto an area of φ60 mm on a surface of the comparative sample at room temperature. The Raman scattering spectrum of the sample was observed after the radiation of the $F_2$ laser. Fig. 6B shows the Raman scattering spectrums of the sample before and after the radiation of the $F_2$ laser. As shown in Fig. 6B, the intensity of the Raman scattering of the hydrogen molecules observed in the vicinity of 4140 $cm^{-1}$ was decreased by 80 % at the irradiated portion (after the radiation). According to the integrated intensity of the Raman scattering, it was revealed that the sample after the radiation of the $F_2$ laser contained OH by 1,050 wt. ppm and the hydrogen molecules by 0.2 x $10^{18}$ molecules/$cm^3$. That is, as a result of the $F_2$ laser radiation, OH was increased by 50 wt. ppm, and the hydrogen molecules were decreased by 0.8 x $10^{18}$ molecules/$cm^3$.

The compaction of the comparative sample was measured in the same manner as in Example 1. As a result, the compaction was 5 ppm.

The ArF excimer laser consisting of 1 x $10^8$ pulses was radiated at 10 mJ/$cm^2$ at room temperature perpendicularly onto an area of φ60 mm on a surface of another comparative sample not irradiated with the $F_2$ laser. The transmittance at 193 nm, which was 90.68 % before the radiation, was decreased to 89.50 % at the irradiated portion. It is understood that the comparative sample does not have any sufficient laser resistance as the glass for the ArF excimer laser.

Example 2

A sample was manufactured in accordance with approximately the same method as that used in Example 1. However, the sample contained substantially no OH group, the sample contained the hydrogen molecules in an amount of 1 x $10^{18}$ molecules/$cm^3$, and the sample contained fluorine in an amount of 3,000 wt. ppm, for example, by controlling of components and the fluorine dope. The components and the composition of the sample were confirmed by the Raman scattering spectrum and the infrared absorption spectrum. 2 x $10^6$ pulses of the $F_2$ laser with a fluence of 10 mJ/$cm^2$ were radiated at room temperature perpendicularly onto an area of φ60 mm on a surface of the sample. The Raman scattering spectrum of the sample was observed after the radiation of the $F_2$ laser. Fig. 7A shows infrared absorption spectrums of the sample before and after the radiation of the $F_2$ laser. As shown in Fig. 7A, an infrared absorption band of SiOH appeared in the vicinity of 3660 $cm^{-1}$. The integrated intensity was determined for the infrared absorption band of SiOH. As a result, the integrated intensity was 22/$cm^2$. According to the integrated intensity, the OH group concentration was estimated to be 10 wt. ppm. According to the integrated intensity of the Raman scattering, the sample contained the hydrogen molecules by 0.8 x $10^{18}$ molecules/$cm^3$, and the hydrogen molecules were decreased by 0.2 x $10^{18}$ molecules/$cm^3$.

The transmittance was measured at 157 nm for the sample irradiated with the $F_2$ laser. As a result, the transmittance was 79.3 % (including the reflection). The transmittance was decreased by about 0.5 % as compared with the transmittance of 79.8 % of the sample before the radiation. However, the satisfactory laser resistance was successfully obtained as the quartz glass for the $F_2$ laser.

Further, the compaction was measured in the same manner as in Example 1 for the sample irradiated with the $F_2$ laser and the sample not irradiated therewith. As a result, the compaction was 1.0 ppm.

Comparative Example 2

A sample was synthesized in the same manner as in Example 2 described above. However, the comparative sample doped with no fluorine was manufactured, which was evaluated in the same manner as in Example 2.

The comparative sample contained substantially no OH group, and the comparative sample contained the hydrogen molecules in an amount of 1 x $10^{18}$ molecules/$cm^3$. 2 x $10^6$ pulses of the $F_2$ laser with a fluence of 10 mJ/$cm^2$ were radiated at room temperature perpendicularly onto an area of φ60 mm on a surface of the comparative sample. As a result, as shown in Fig. 7B, an infrared absorption band of SiOH appeared. The integrated intensity of the infrared absorption band was 220/$cm^2$. The OH group concentration, which was determined from the integrated intensity, was 100 wt. ppm. The Raman scattering band of the hydrogen molecules was not observed. According to this fact, it is understood that the hydrogen molecules were decreased by 1 x $10^{18}$ molecules/$cm^3$.

Further, the compaction was measured in the same manner as in Example 1 for the comparative sample irradiated with the $F_2$ laser and the comparative sample not irradiated therewith. As a result, the compaction was 2.5 ppm.

The transmittance was measured at a wavelength of 157 nm for the comparative sample irradiated with the $F_2$ laser. As a result, the transmittance was 69.0 % (including the reflection). The transmittance was decreased by about 9.2 % as compared with the transmittance of 78.2 % (including the reflection) before the radiation. This fact means that the laser resistance is insufficient for the quartz glass for the $F_2$ laser.

Example 3

A synthetic quartz glass block, which had the same composition as that in Example 2 (doped with fluorine 3,000 wt. ppm), was prepared to manufacture a reticle substrate having one side of 140 (mm) and a thickness of 1/4 (inch). 2 x $10^6$ pulses of the $F_2$ laser with 10 mJ/$cm^2$ were radiated onto the entire surface of the substrate at room temperature. After the radiation, the transmittance ($\lambda$ = 157 nm) was decreased by 1.0 % in the vicinity of the center of the sample, and the difference between the maximum and minimum values of the transmittance was 0.8 % in the plane of 140 mm x 140 mm. The substrate had the satisfactory laser resistance and the uniform transmittance as the reticle substrate for the $F_2$ laser.

Further, the compaction amount was measured in the same manner as in Example 1 for the portion irradiated with the $F_2$ laser in relation to the sample substrate manufactured in the same manner as described above. As a result, the compaction amount of the irradiated portion was 1.0 ppm.

Comparative Example 3

A sample was synthesized in the same manner as in Example 3. However, a comparative substrate doped with no fluorine was manufactured, which was evaluated in the same manner as in Example 3. 2 x $10^6$ pulses of the $F_2$ laser with 10 mJ/$cm^2$ were radiated onto the entire surface of the substrate at room temperature. After the radiation, the transmittance at 157 nm was decreased by 10 % in the vicinity of the center of the sample, and the difference between the maximum and minimum values of the transmittance was 3 % in the plane of 140 mm x 140 mm. It is not affirmed that the substrate has the satisfactory laser resistance as the reticle substrate for the $F_2$ laser. Further, the compaction amount was measured in the same manner as in Example 1 for the portion irradiated with the $F_2$ laser in relation to the sample substrate manufactured in the same manner as described above. As a result, the compaction amount of the irradiated portion was 2.5 ppm.

Example 4

Next, an exposure apparatus of the present invention will be explained by way of example. Fig. 8 shows a schematic structure of a projection exposure apparatus called "stepper" based on the use of the quartz glass members produced in Example 1 as lenses. This apparatus projects an image of a pattern of a reticle (mask) R onto a wafer W coated with a photoresist. As shown in Fig. 8, the exposure apparatus 600 principally includes a light source 100 which supplies the exposure light beam, a reticle stage 201 on which the reticle R is placed, a wafer stage 301 on which the wafer W is placed, an illumination optical system 101 which illuminates the reticle R, and a projection optical system 500. A substrate 801 (wafer W), to which a photosensitizer 701 is applied, is placed on a surface 301a of the wafer stage 301. The light source 100 uses an ArF laser (193 nm). In place of the ArF laser, it is possible to use a laser for emitting the vacuum ultraviolet light such as an $F_2$ laser (wavelength: 157 nm). The projection optical system 500 projects an image of the surface P1 (object plane) of the reticle R onto the surface P2 (image plane) of the substrate W which is in the conjugate relationship with respect to P1. The illumination optical system 101 is provided with an alignment optical system 110 in order to regulate the relative position between the reticle R and the wafer W. A reticle exchange system 200 exchanges and transports the reticle (mask R) set to the reticle stage 201. The reticle exchange system 200 includes a stage driver (not shown) for moving the reticle stage 201 in parallel to the surface 301a of the wafer stage 301. The wafer stage 301 is moved with respect to the projection optical system 500 controlled by the stage control system to change the area on the wafer W to which the reticle pattern is transferred. The light source 100, the reticle exchange system 200, and the stage control system 300 are managed by a main control unit 400.

The quartz glass members produced in Example 1 described above are used for an optical lens 90 included in the illumination optical system 101 and an optical lens 92 included in the projection optical system 500 respectively. Therefore, the exposure apparatus is excellent in the resistance to the ArF laser beam supplied from the light source 100, and the satisfactory transmittance is maintained over a long period of time. Therefore, it is possible to realize a long service life of the exposure apparatus. Further, the throughput is consequently improved as well, for example, when semiconductor circuits and liquid crystal display substrates are produced. Further, the reticle R is also produced by using the quartz glass substrate produced in Example. Therefore, the deterioration of the transmittance is sufficiently suppressed during the exposure operation. The highly accurate reticle pattern is prevented from the deterioration.

INDUSTRIAL APPLICABILITY

The characteristic deterioration such as the deterioration of the transmittance in the vacuum ultraviolet region, which is considered to be caused by the reaction of the strained Si-O-Si bond, is suppressed in the synthetic quartz glass member of the present invention. Therefore, the synthetic quartz glass member of the present invention is preferably usable for the element such as lenses, prisms, and reticles having the excellent laser resistance to the ArF excimer laser and the $F_2$ laser. The optical element excellent in the laser resistance in the vacuum ultraviolet region and the exposure apparatus provided with the same can be provided in accordance with the method for producing the synthetic quartz glass member of the present invention. The exposure apparatus of the present invention is provided with the synthetic quartz glass member of the present invention. Therefore, even when any vacuum ultraviolet light source such as ArF is used, it is possible to suppress the deterioration of the pattern image over a long period of time, which would be otherwise caused by the deterioration of the transmittance.

**Claims**

1. A synthetic quartz glass member for being irradiated with a vacuum ultraviolet light beam, wherein OH groups, which are contained in the synthetic quartz glass member, are increased by less than 100 wt. ppm, and a compaction is not more than 2 ppm, when the synthetic quartz glass member is subjected to $2 \times 10^6$ pulses of an $F_2$ laser beam with a fluence of 10 mJ/$cm^2$.

2. The synthetic quartz glass member according to claim 1, wherein an integrated intensity of an infrared absorption band based on OH stretching vibration is increased by less than 10 %, when the synthetic quartz glass member is subjected to $2 \times 10^6$ pulses of the $F_2$ laser beam with the fluence of 10 mJ/$cm^2$.

3. A synthetic quartz glass member for being irradiated with a vacuum ultraviolet light beam, wherein $H_2$ molecules, which are contained in the synthetic quartz glass member, are decreased by less than $1 \times 10^{18}$ molecules/$cm^3$, and a compaction is not more than 2 ppm, when the synthetic quartz glass member is subjected to $2 \times 10^6$ pulses of an $F_2$ laser beam with a fluence of 10 mJ/$cm^2$.

**4.** The synthetic quartz glass member according to claim 3, wherein a Raman scattering peak based on stretching vibration of the $H_2$ molecules is decreased by less than 80 %, when synthetic quartz glass member is subjected to 2 x $10^6$ pulses of the $F_2$ laser beam with fluence of 10 mJ/$cm^2$.

**5.** The synthetic quartz glass member according to any one of claims 1 to 4, wherein hydrogen molecules contained in the synthetic quartz glass member have a concentration of not less than 2 x $10^{17}$ molecules/$cm^3$.

**6.** The synthetic quartz glass member according to any one of claims 1 to 4, wherein OH groups contained in the synthetic quartz glass member have a concentration of 500 wt. ppm to 1,300 wt. ppm.

**7.** The synthetic quartz glass member according to any one of claims 1 to 4, wherein fluorine contained in the synthetic quartz glass member has a concentration of not less than 300 wt. ppm.

**8.** The synthetic quartz glass member according to any one of claims 1 to 4, wherein an internal transmittance ($\lambda$ = 157 nm) in a direction perpendicular to an optical axis, which is obtained after radiating 2 x $10^6$ pulses of the $F_2$ laser beam with the fluence of 10 mJ/$cm^2$, is not less than 90 % per a thickness of 1/4 inch, and a difference between maximum and minimum values is within 1.0 % in an irradiated area.

**9.** The synthetic quartz glass member according to any one of claims 1 to 4, wherein the synthetic quartz glass member is a mask used for an exposure apparatus.

**10.** A method for producing a synthetic quartz glass member, comprising the steps of:

producing a base material of synthetic quartz glass;
sampling a part of the base material; and
processing the base material to prepare the synthetic quartz glass member on condition that OH groups, which are contained in the part of the base material, are increased by less than 100 wt. ppm, and a compaction is not more than 2 ppm, when the part of the sampled base material is subjected to 2 x $10^6$ pulses of an $F_2$ laser beam with a fluence of 10 mJ/$cm^2$.

**11.** The method for producing the synthetic quartz glass member according to claim 10, wherein the increase in the OH groups is determined in accordance with increase in an integrated intensity of an infrared absorption band based on OH stretching vibration.

**12.** The method for producing the synthetic quartz glass member according to claim 11, wherein the increase in the integrated intensity of the infrared absorption band based on the OH stretching vibration is less than 10 %.

**13.** A method for producing a synthetic quartz glass member, comprising the steps of:

producing a base material of synthetic quartz glass;
sampling a part of the base material; and
processing the base material to prepare the synthetic quartz glass member on condition that $H_2$ molecules, which are contained in the part of the base material, are decreased by less than 1 x $10^{18}$ molecules/$cm^3$, and a compaction is not more than 2 ppm, when the part of the sampled base material is subjected to 2 x $10^6$ pulses of an $F_2$ laser beam with a fluence of 10 mJ/$cm^2$.

**14.** The method for producing the synthetic quartz glass member according to claim 13, wherein the decrease in the $H_2$ molecules is determined by observing a Raman scattering spectrum based on stretching vibration of the $H_2$ molecules.

**15.** The method for producing the synthetic quartz glass member according to claim 14, wherein decrease in a Raman scattering spectrum peak based on the stretching vibration of the $H_2$ molecules is less than 80 %.

**16.** An exposure apparatus for transferring a pattern formed on a mask onto a substrate, the exposure apparatus comprising:

a light source which generates a vacuum ultraviolet light beam;
an illumination system which illuminates the mask with the light beam from the light source; and
a projection optical system which projects the pattern on the illuminated mask onto the substrate, wherein:

at least one of the illumination optical system and the projection optical system includes the synthetic quartz glass member as defined in claim 1.

**17.** The exposure apparatus according to claim 16, wherein the light source is an ArF laser.

**18.** An exposure apparatus for transferring a pattern formed on a mask onto a substrate, the exposure apparatus comprising:

a light source which generates a vacuum ultraviolet light beam;
an illumination system which illuminates the mask with the light beam from the light source; and
a projection optical system which projects the pattern on the illuminated mask onto the substrate, wherein:

at least one of the illumination optical system and the projection optical system includes the synthetic quartz glass member as defined in claim 3.

**19.** The exposure apparatus according to claim 18, wherein the light source is an ArF laser.

Fig. 1

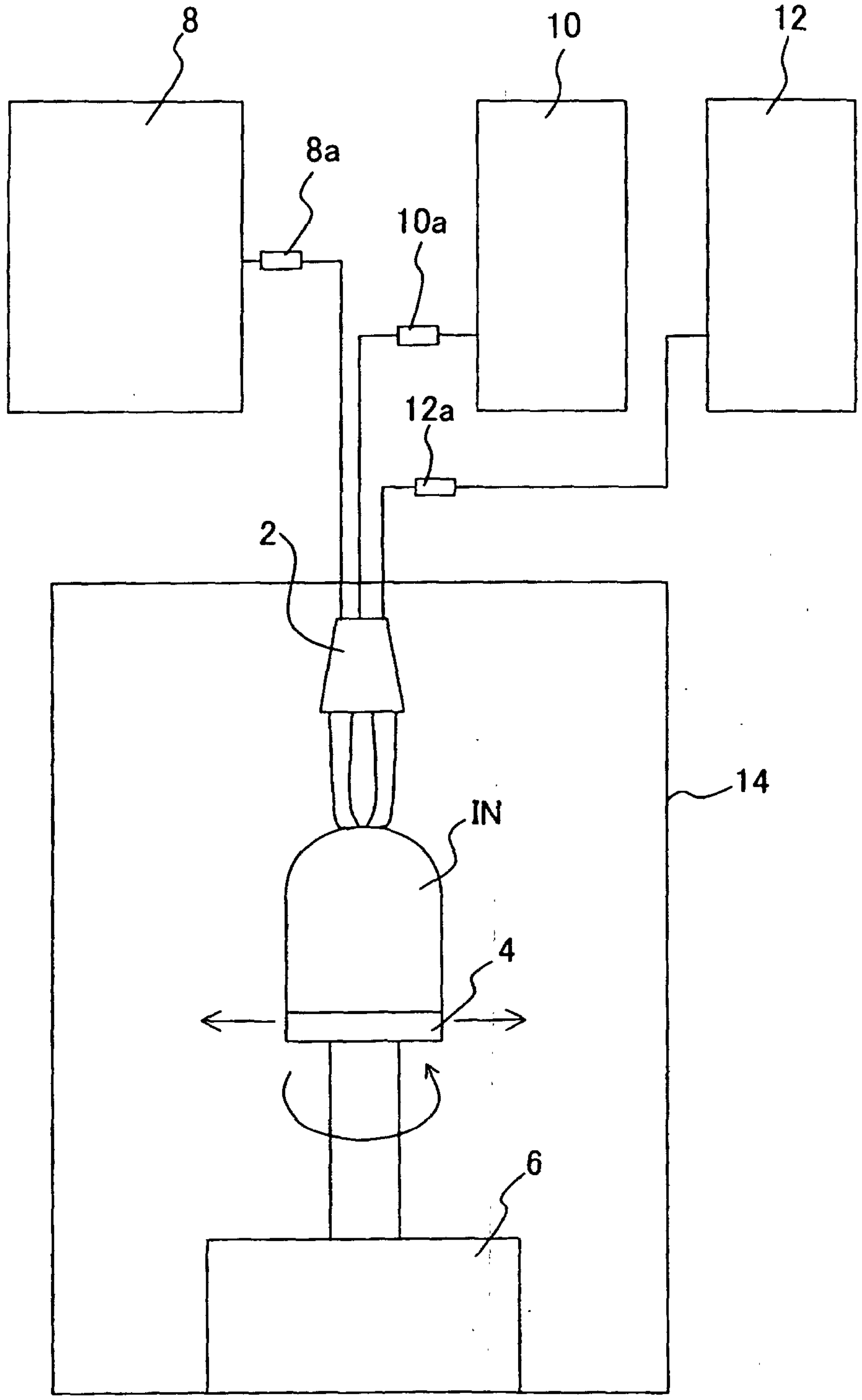

Fig. 2

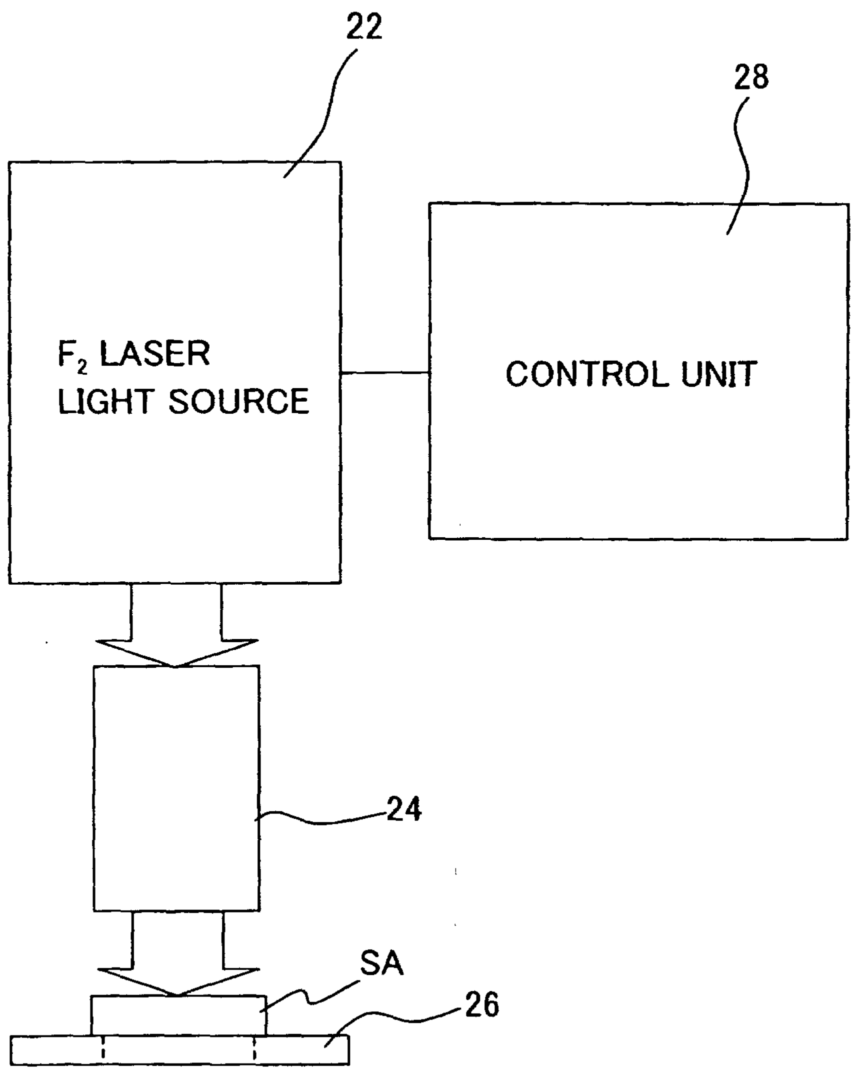

Fig. 3

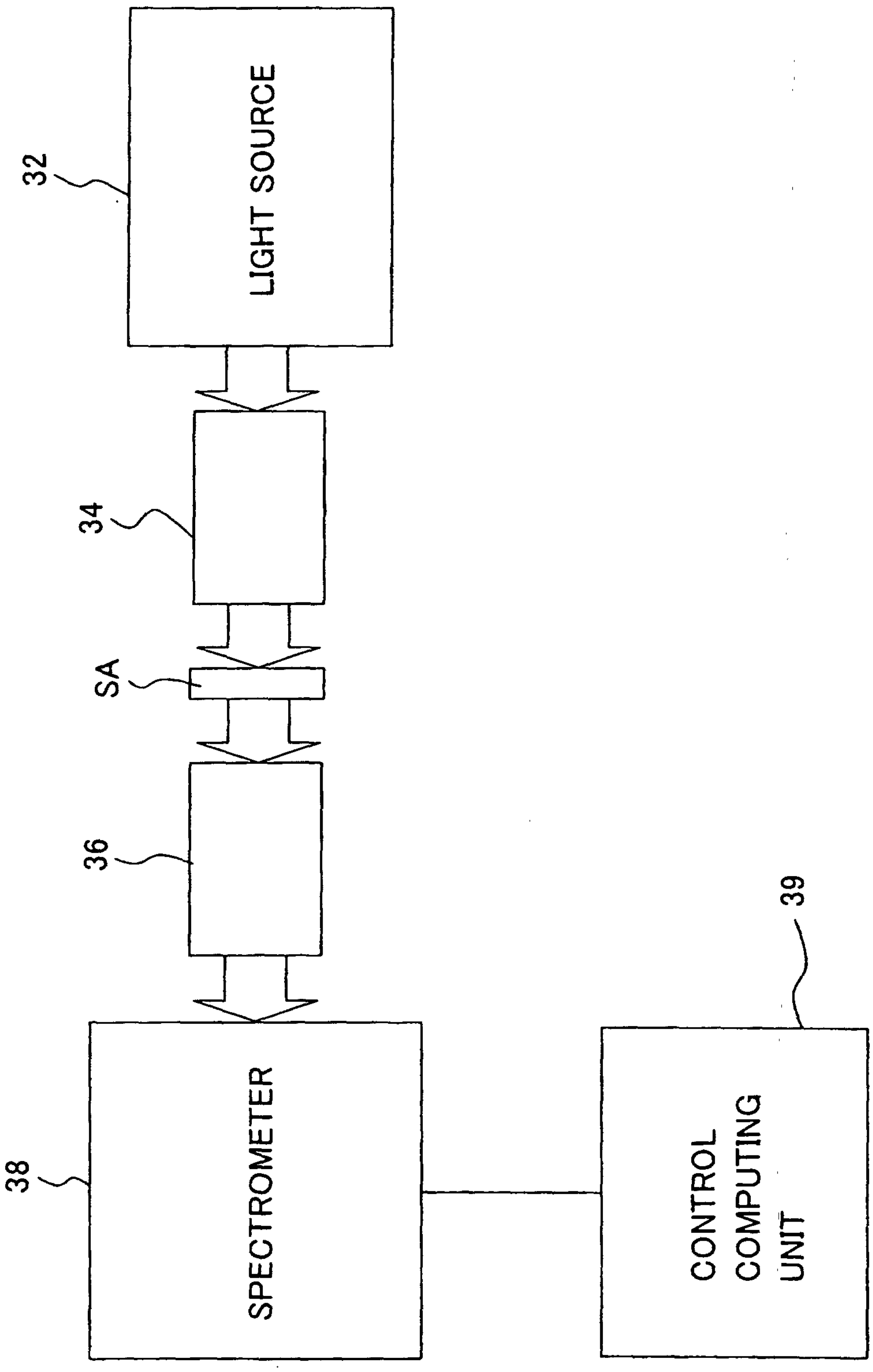
32
LIGHT SOURCE
34
SA
36
38
SPECTROMETER
39
CONTROL
COMPUTING
UNIT

Fig. 4

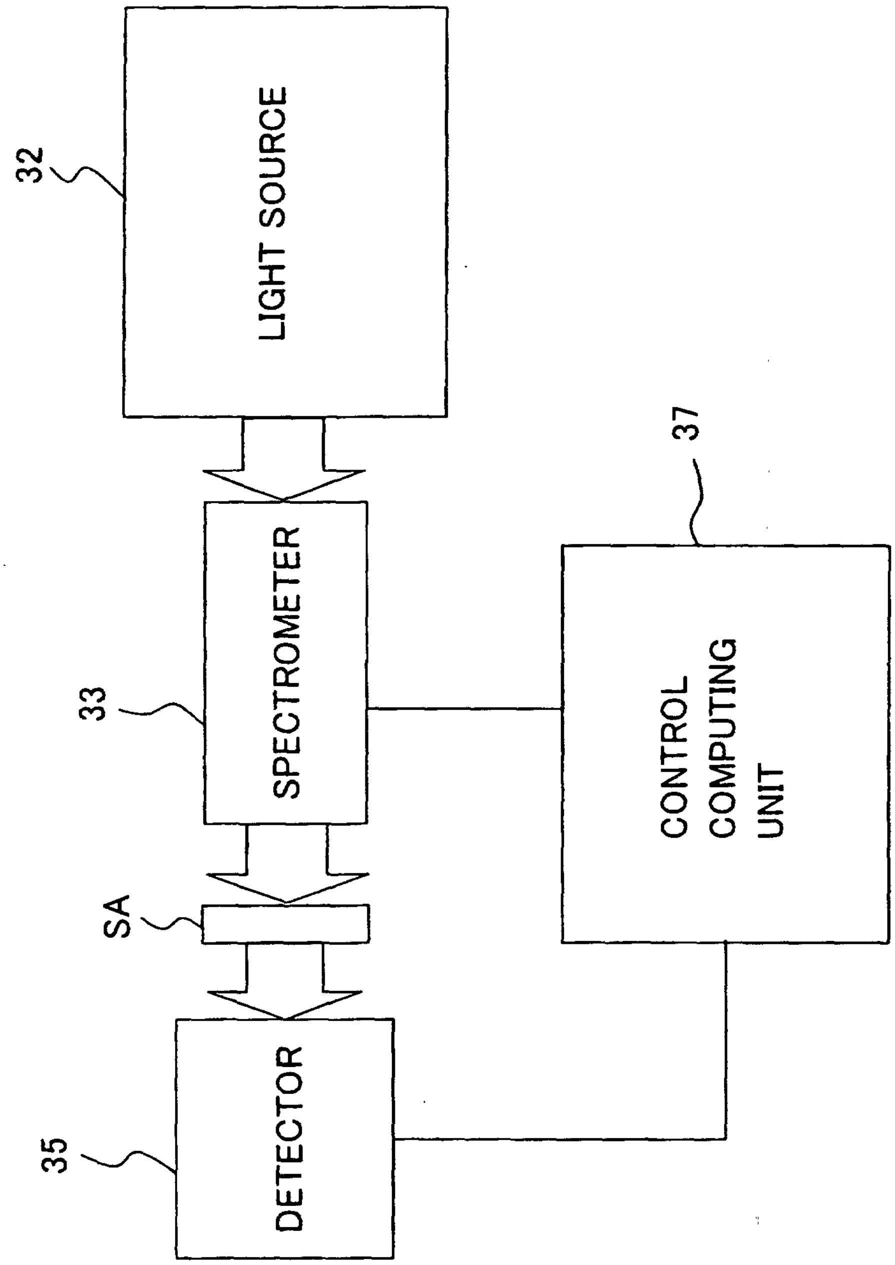
LIGHT SOURCE
32
SPECTROMETER
33
SA
DETECTOR
35
CONTROL
COMPUTING
UNIT
37

Fig. 5

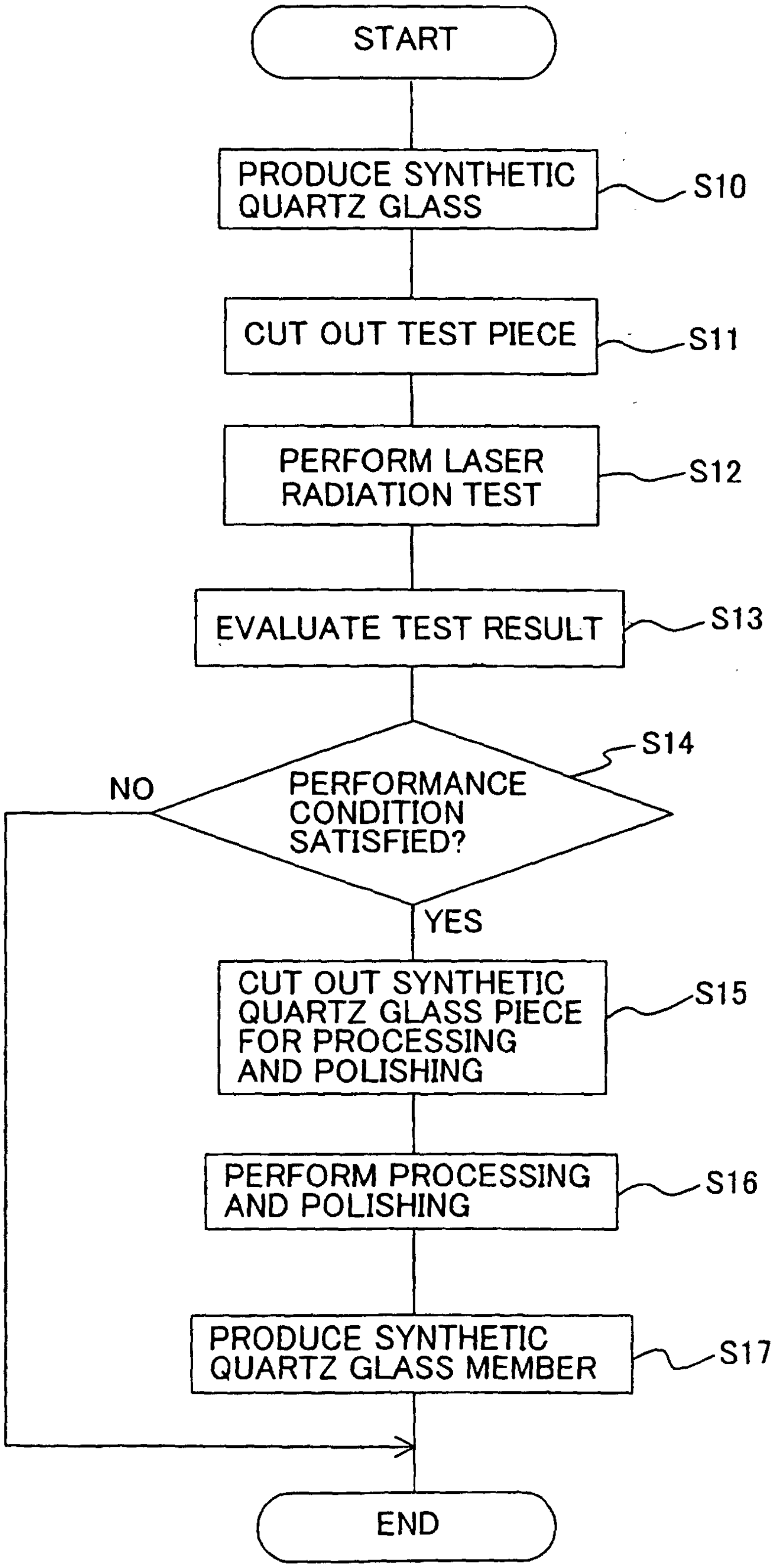
START
PRODUCE SYNTHETIC QUARTZ GLASS
S10
CUT OUT TEST PIECE
S11
PERFORM LASER RADIATION TEST
S12
EVALUATE TEST RESULT
S13
PERFORMANCE CONDITION SATISFIED?
S14
NO
YES
CUT OUT SYNTHETIC QUARTZ GLASS PIECE FOR PROCESSING AND POLISHING
S15
PERFORM PROCESSING AND POLISHING
S16
PRODUCE SYNTHETIC QUARTZ GLASS MEMBER
S17
END

Fig. 6A

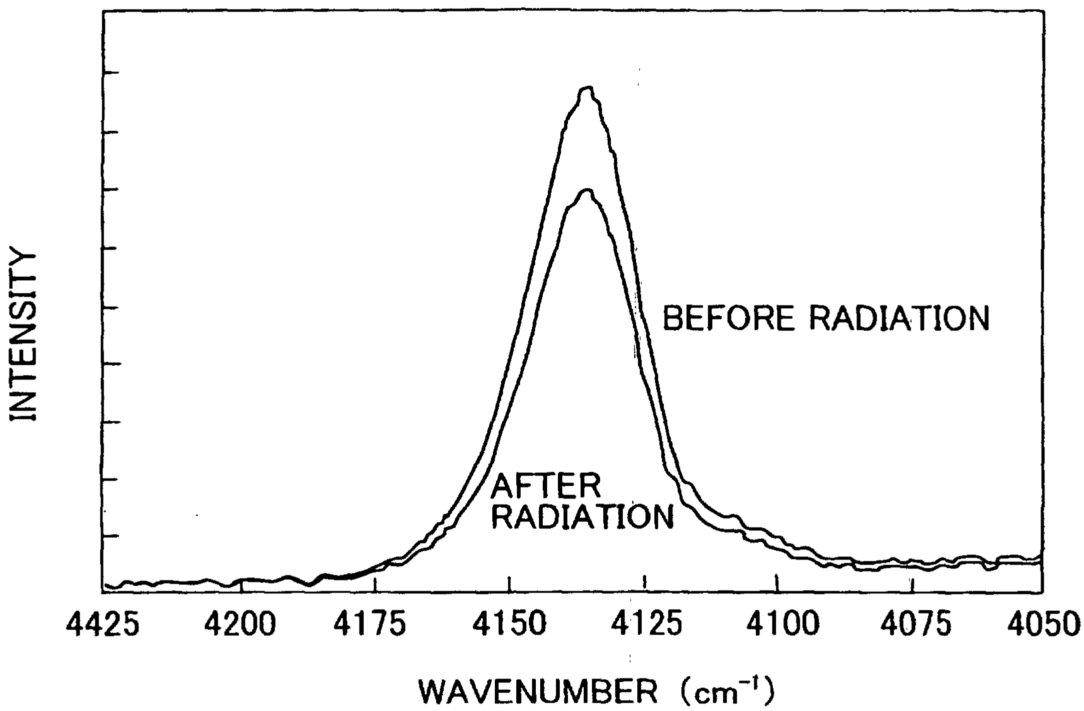
INTENSITY
BEFORE RADIATION
AFTER
RADIATION
4425
4200
4175
4150
4125
4100
4075
4050
WAVENUMBER (cm-1)

Fig. 6B

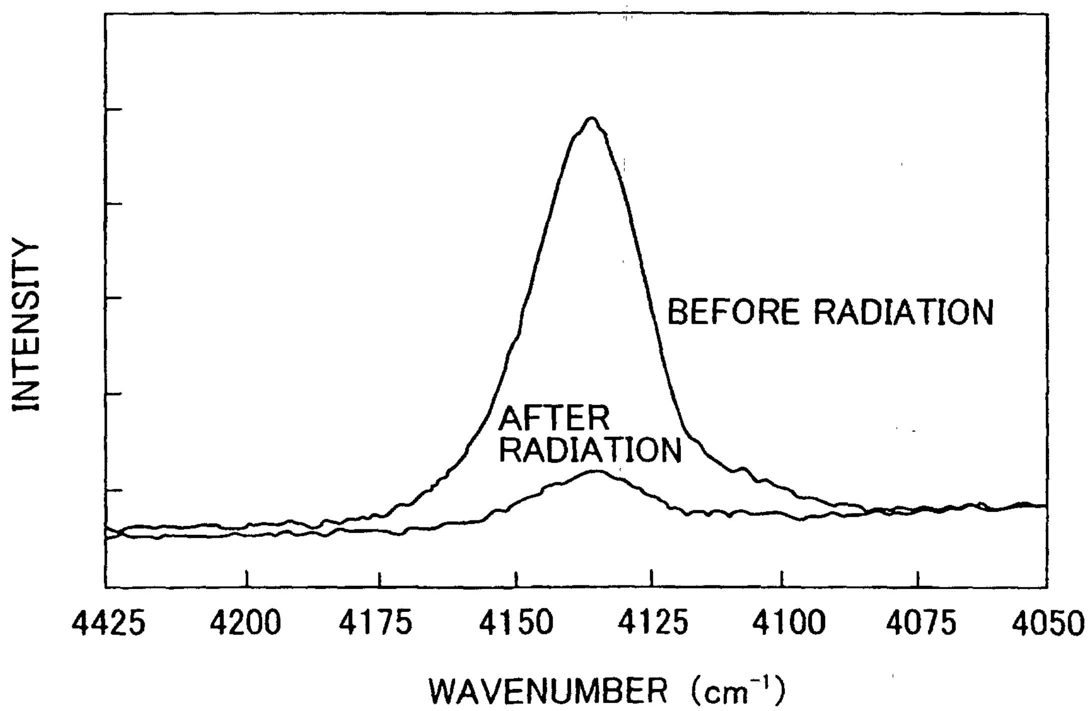
INTENSITY
BEFORE RADIATION
AFTER
RADIATION
4425
4200
4175
4150
4125
4100
4075
4050
WAVENUMBER (cm-1)

Fig. 7A

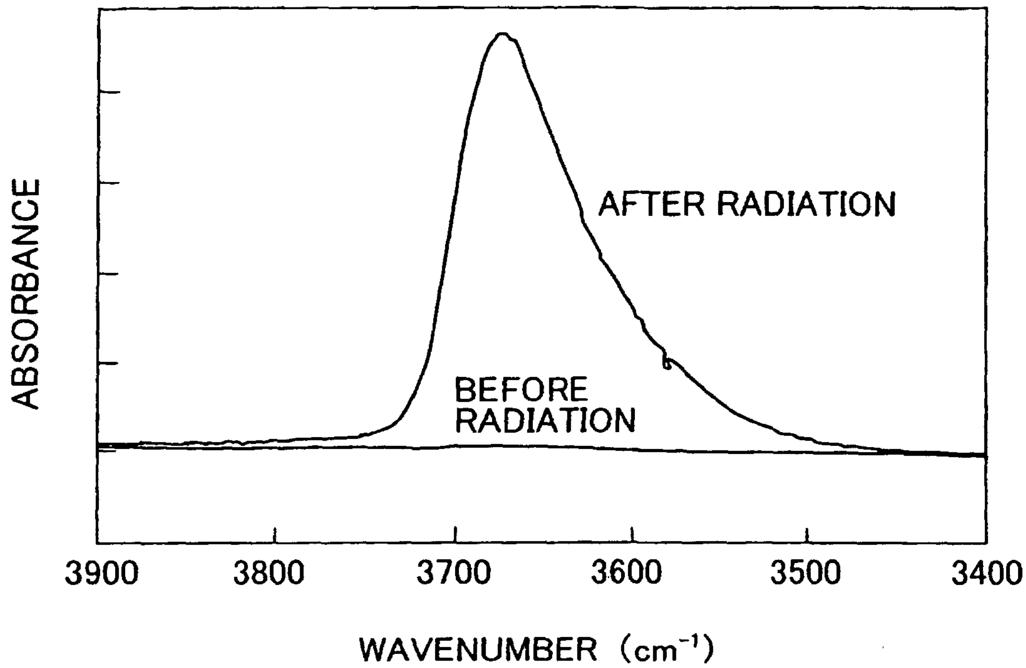
ABSORBANCE
AFTER RADIATION
BEFORE
RADIATION
3900
3800
3700
3600
3500
3400
WAVENUMBER (cm$^{-1}$)

Fig. 7B

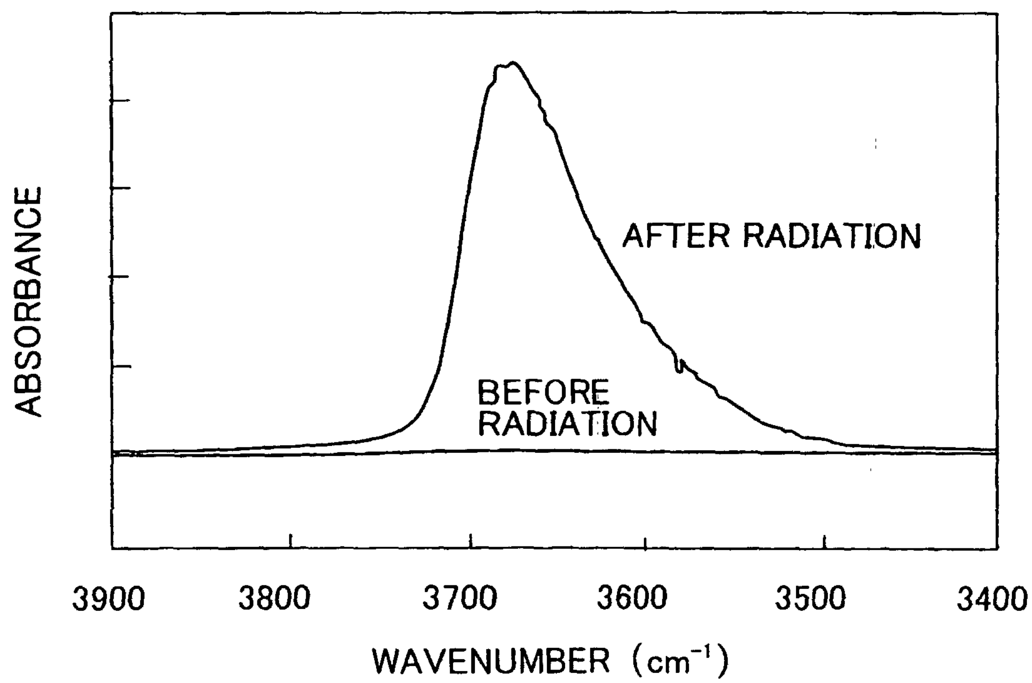
ABSORBANCE
AFTER RADIATION
BEFORE
RADIATION
3900
3800
3700
3600
3500
3400
WAVENUMBER (cm$^{-1}$)

Fig. 8

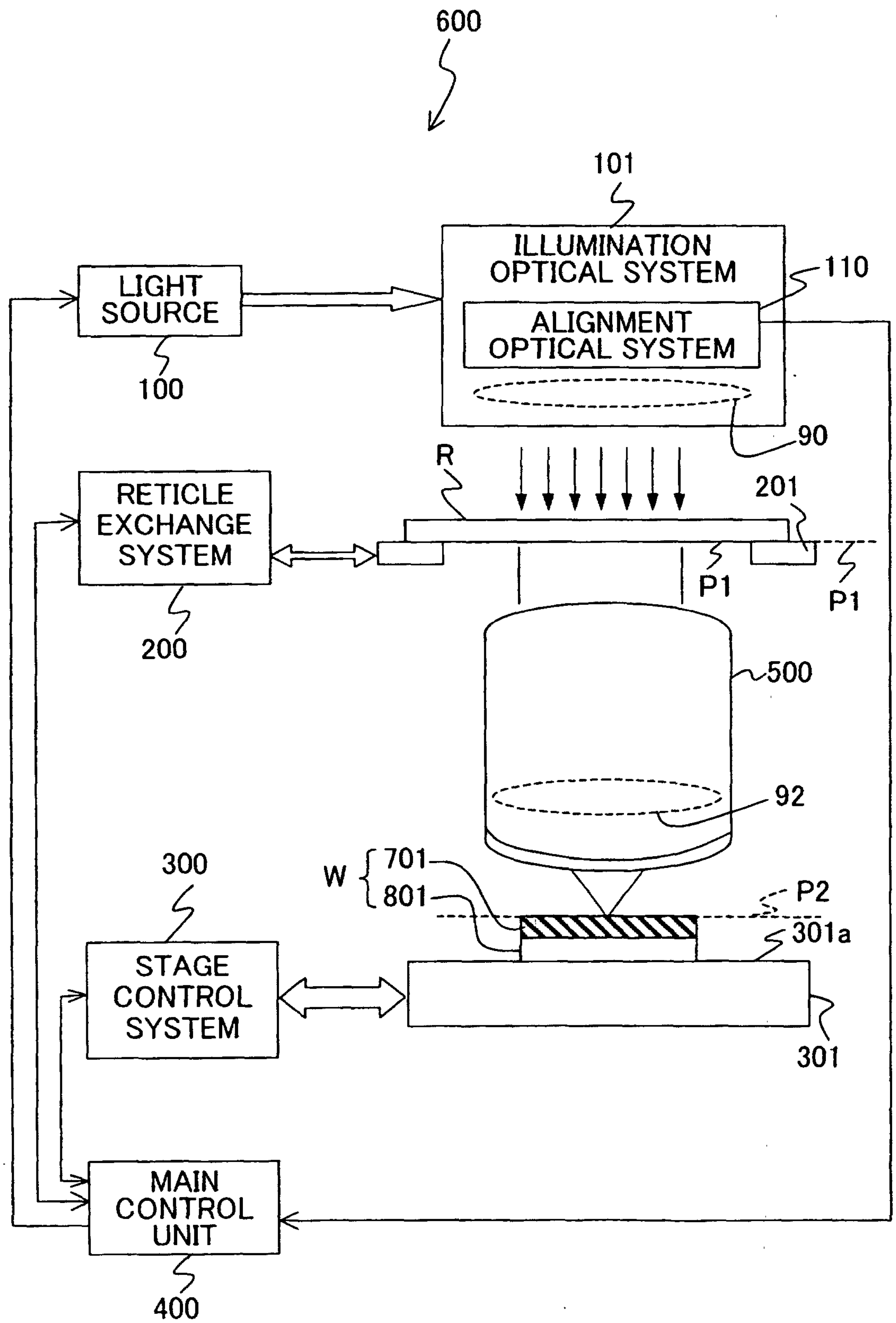
600
101
ILLUMINATION
OPTICAL SYSTEM
110
ALIGNMENT
OPTICAL SYSTEM
LIGHT
SOURCE
100
90
R
201
RETICLE
EXCHANGE
SYSTEM
P1
P1
200
500
92
300
W
701
801
P2
301a
STAGE
CONTROL
SYSTEM
301
MAIN
CONTROL
UNIT
400

## INTERNATIONAL SEARCH REPORT

International application No.
PCT/JP03/03618

A. CLASSIFICATION OF SUBJECT MATTER
Int.Cl⁷ C03C3/06, C03B20/00

According to International Patent Classification (IPC) or to both national classification and IPC

B. FIELDS SEARCHED

Minimum documentation searched (classification system followed by classification symbols)
Int.Cl⁷ C03C3/06, C03B20/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | EP 943586 A2 (NIKON CORP.), 22 September, 1999 (22.09.99), Claims; Par. Nos. [0006] to [0007], [0035] to [0039], [0068]; table 1 & JP 11-209134 A Claims; Par. Nos. [0006] to [0007], [0024] to [0028], [0066]; table 1 | 1-19 |
| Y | EP 720969 A1 (NIKON CORP.), 10 July, 1996 (10.07.96), Claims; page 2, lines 29 to 46; page 4, lines 34 to 55; page 5, lines 50 to 55; table 3 & JP 9-2828 A Claims; Par. Nos. [0005], [0007], [0017], [0019], [0026]; table 3 & US 5707908 A | 1-19 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June, 2003 (17.06.03) | 01 July, 2003 (01.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No. PCT/JP03/03618

C (Continuation). DOCUMENTS CONSIDERED TO BE RELEVANT

| Category* | Citation of document, with indication, where appropriate, of the relevant passages | Relevant to claim No. |
|---|---|---|
| Y | MIZUGUCHI, Masafumi et al., Photochemical processes induced by 157-nm light in $H_2$-inpregnated glassy $SiO_2$:OH OPTICS LETTERS 01 July, 1999 (01.07.99), Vol.24, No.13; pages 863 to 865 | 1-19 |
| Y | JP 11-116248 A (NIKON CORP.), 27 April, 1999 (27.04.99), Par. Nos. [0007] to [0010]; table 2 (Family: none) | 1-19 |
| Y | EP 720970 A1 (NIKON CORP.), 10 July, 1996 (10.07.96), Claims; page 5, lines 3 to 24, 43 to 49; table 3 & JP 8-259255 A Claims; Par. Nos. [0024] to [0026], [0029]; table 3 & Us 6087283 A | 7 |

Form PCT/ISA/210 (continuation of second sheet) (July 1998)